# EUROPEAN PATENT SPECIFICATION

(11) **EP 4 001 884 B1**
(45) Date of publication and mention of the grant of the patent: **05.11.2025**
(21) Application number: 21208613.6
(22) Date of filing: 16.11.2021
(51) Int. Cl.: G01N 1/22, B01L 7/00, B64D 11/04

(54) **METHOD FOR COLLECTING PARTICULATES REPRESENTATIVE OF A PASSENGER CABIN ON AN AIRCRAFT TO SEARCH FOR NON-DESCRIBED EMERGING PATHOGENS, AND SYSTEM**
VERFAHREN ZUM EINSAMMELN VON FÜR PASSAGIERKABINE REPRÄSENTATIVEN PARTIKELN IN EINEM FLUGZEUG, UM NACH NICHT BESCHRIEBENEN, NEU AUFTRETENDEN PATHOGENEN ZU SUCHEN, UND SYSTEM
PROCÉDÉ DE COLLECTION D'ÉCHANTILLON REPRÉSENTATIF D'UNE CABINE DE PASSAGERS SUR UN AÉRONEF POUR RECHERCHER DES PATHOGÈNES ÉMERGENTS NON DÉCRITS, ET SYSTÈME

(30) Priority: 16.11.2020 US 202063114400 P; 16.11.2020 US 202063114330 P; 16.11.2020 US 202063114339 P; 16.11.2020 US 202063114064 P; 16.11.2020 US 202063114157 P; 16.11.2020 US 202063114386 P; 16.11.2020 US 202063114366 P
(43) Date of publication of application: 25.05.2022
(73) Proprietor: B/E Aerospace Inc., Winston Salem, NC 27105 (US)
(72) Inventor: GONZALEZ, Arnau Castillo, 3607 AK Maarseen (NL); MARTINEZ-MURCIA, Antonio, 03206 Elche (ES)
(74) Representative: Dehns

(56) References cited:
- US-A1- 2003 153 021
- US-A1- 2008 003 649
- US-A1- 2008 245 706
- US-A1- 2011 159 596
- KORVES T. M. ET AL: "Bacterial communities in commercial aircraft high-efficiency particulate air (HEPA) filters assessed by PhyloChip analysis :", INDOOR AIR, vol. 23, no. 1, 8 June 2012 (2012-06-08), DK, pages 50 - 61, XP055907740, ISSN: 0905-6947, DOI: 10.1111/j.1600-0668.2012.00787.x

## Description

### CROSS-REFERENCE TO RELATED APPLICATION

The following application claims priority to U.S. Provisional Patent Applications with the following Serial Nos. 63/114,330, 63/114,339, 63/114,350, 63/114,400, 63,114,064, 63/114,157, 63/114,386, 63/114,366 all filed on November 16, 2020.

### BACKGROUND OF THE INVENTION

### 1. Field of the Invention

The present application is related to a system and method used collect a representative air sample of an aircraft, more specifically to a method and systems for collecting and analyzing an air sample on an aircraft to determine all genetic sequences present in the sample and identifying the microbiota, including non-described emerging pathogens.

### 2. Description of Related Art

The spread progression of SARS-CoV-2 around the world has risen a red flag: Economic economic globalization creates systemic risks. As trade, finance, travel, cyber and other networks grow in scale and interact, they become more complex and unstable. The transporters of the goods of the global economy, such as major airport hubs, are also spreaders of the pathogens. The 2008 global financial crisis provided a dramatic example of how contagions could spread from the US to global markets overnight. So too has the rapid spread of cyber viruses. In health, rising life expectancy and success in preventing a repeat of the devastating influenza pandemic of 1918, which infected about one-third of the world's population and killed as many as 50m people, has created a false sense of security. But the world is now more interdependent. For example, China represents almost one-fifth of global output, is integral to global supply chains, and its tourists spend over $260 billion annually. The CovidCOVID-19CoVID-19 pandemic shed light on the need for better monitoring, detecting, and isolating ill passengers, specifically due to the havoc that was wreaked detrimental impact on the global economy, specifically air travel due to closed borders, movement restrictions, and testing requirements.

However, the COVIDCoVID-19 pandemic the air travel industry has proven that air travel can be safe and that aircraft cabins have a well-managed airflow that inhibits minimize the risk for transmission of virus, and that being seated onboard an aircraft is safer than shopping in large stores. Governments and other authorities need to assume that aircraft are contaminated until proven "clean", as 25% of COVID-19 cases are asymptomatic or pre-symptomatic; but still contagious. Thus, if borders shutdown and a drastic reduction in international travel global passenger travel is greatly reduced. To date travelers and governments have relied on individual diagnostic tests. The uncertainty of the results has reduced people's inclination to travel and subsequent airline inclination to maintain routes.

Accordingly, there is still a need in the art for unknown virus and pathogen identification and detection systems and methods to be implemented in the cabins of commercial aircrafts. The present disclosure provides a solution for this need. US 2008/003649 relates to thermal cycling. US 2003/153021 relates to a monitoring system for anthrax smallpox and other pathogens. Korves T. M. et al "Bacterial communities in commercial aircraft high-efficiency particulate air (HEPA) filters assessed by PolyChip analysis" INDOOR AIR vol. 23, no. 1, 8 June 2012, pages 50-61 discusses bacteria in HEPA filters. US 2011/159596 relates to a substance detector. US 2008/245706 relates to a soil separator and sampler.

### SUMMARY OF THE INVENTION

A method for collecting particulates from aircraft air is provided in claim 1. The method includes capturing particulates in at least one of an outlet flow path or a recirculation flow path with a collector for a period of time, removing the collector from at least one of the outlet flow path or the recirculation flow path for testing, inserting a clean collector into at least one of the outlet flow path or the recirculation flow path for use during another period of time, conducting a test on at least one particulate captured in the collector, relaying a result of the test to a central data center to store the results, and identifying a previously non-described emerging pathogens within the results. The test can include a pathogen detector or a chemical or irritant detector. Or a genetic sequence determination (a sequencer)

The method can further include aggregating a plurality of tests to develop a pattern of all microorganisms (bacteria, virus, fungi) including the pathogens. The method can include receiving an alarm or signal to aggregate a particular type of result. The test can include phylogenetic analysis and sequence comparison (sequence alignments) with databases containing all previously described microorganisms. The method will include the identification of sequences belonging to known pathogen and these corresponding to non-described taxa. The method will include a search for possible pathogenic characteristics of non-described taxa which may emerge. The method can include communicating test results to corresponding health authorities or communicating test results aggregates to corresponding health authorities.

A system for monitoring aircraft air is also provided in claim 8. The system can include a collector for collecting particulate samples positioned within at least one of an outlet flow path or a recirculation flow path, at least one of an outflow valve positioned in the outlet flow path downstream from the collector or a HEPA filter positioned in the recirculation flow path downstream from the collector, a storage unit or database for storing collected samples or analyzed sample materials of known species and previously non-described emerging pathogens within the results. The system can include the collector includes a filter material, or a buffer-cyclonic collector. The storage unit can be at a remote location with respect to the aircraft.

The samples can include particles and droplets exhaled from passengers throughout a duration of a flight. The collector can include an adaptor and a filter material operatively connected to the adaptor, cyclonic collection in a buffer, etc. The database can include DNA and RNA sequences of all described microbial species, including DNA and RNA sequences different to all these with a known pathogen.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to the figure, wherein:

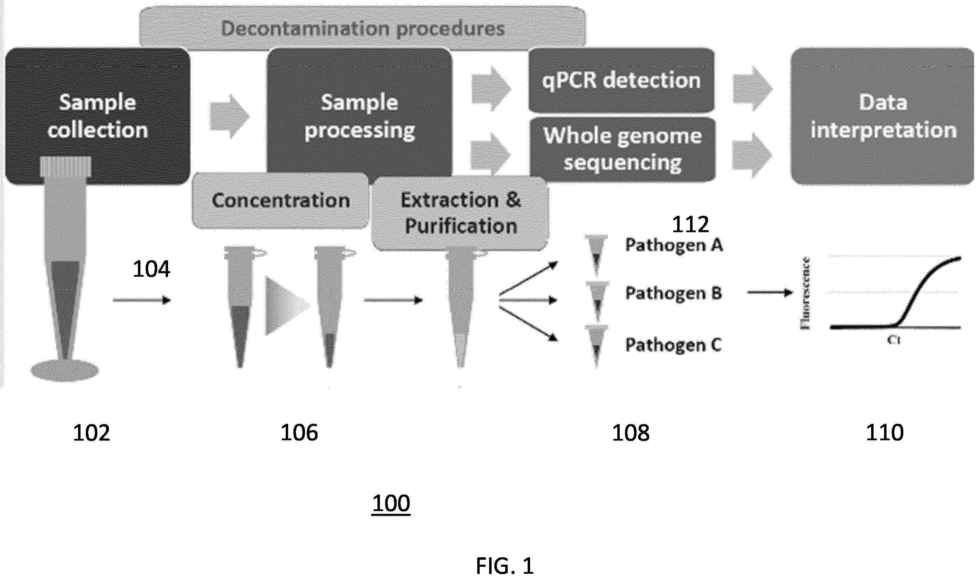

Fig. 1 is a schematic view of a method for collecting and analyzing an aircraft air sample.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a schematic view of an exemplary embodiment of a method monitoring aircraft air in accordance with the disclosure showing a collector within a cabin of an aircraft is shown in Fig. 1 and is designated generally by reference character 100. The systems and methods described herein can be used to provide multiple options for monitoring aircraft air. The embodiments of the system for monitoring aircraft air of the present disclosure provide a means for testing air in any enclosed space such as inside an aircraft, and allows for the identification and detection of a virus or other contaminant, such as a previously undescribed caontaminant.

As shown in FIG. 1, a method 100 for collecting and testing particulates from aircraft air is disclosed. The method 100 includes capturing 102 particulates in at least one of an outlet flow path or a recirculation flow path with a collector over a period of time, removing the collector 104 from at least one of the outlet flow path or the recirculation flow path for testing, concentrating the collected sample 106, conducting a test 108 on at least one particulate captured in the collector, relaying a result 110 of the test to a central data center to store the results, and identifying 112 a previously non-described emerging pathogens within the results. The test can includes a pathogen detector, such as a Pathogen/contaminant diagnostic tester, such as a PCR test, something biological that includes RNA or DNA, or a chemical or irritant that is produced by machinery.

The method 100 also requires include aggregating a plurality of tests from various flight around the world or from a particular destination to develop a pattern of pathogens or irritants. The method can also include receiving an alarm or signal from a central health authority, from a flight operator, or an airport to aggregate a particular type of result and provide a pattern, to predict whether a new strain of a disease is emerging. The test can include doing phylogenetic analysis on the collected samples.

The method 100 can include communicating the individual test results to corresponding health authorities of a particular country or region or communicating test results aggregates to corresponding health authorities. This communication can be requested by the authorities themselves when cases at a local hospital exceed some threshold. The tests can also be collected and stored without testing, and can then be tested when a specific pattern or pathogen needs to be linked to a disease that is spreading across a particular region. It is also considered that the collected samples can be tested for a new DNA and/or RNA strain that has not been linked to a disease previously.

A system for monitoring aircraft air and doing the tests described above is also disclosed. The system includes a collector for collecting samples containing particles from the air, positioned within at least one of an outlet flow path or a recirculation flow path, at least one of an outflow valve positioned in the outlet flow path downstream from the collector or a HEPA filter positioned in the recirculation flow path downstream from the collector, a storage unit or database for storing collected samples or analyzed sample materials of previously non-described emerging pathogens within the results. The collectors can be analyzed in various ways, including removing a portion of the collector, scrubbing the collectors to remove the bio sample, or using a buffer containing reagents to capture the sample. Once the samples are collected the samples can be stored within a storage (-20°C) unit indefinitely until they are required to be tested. The storage unit can be at a remote location with respect to the aircraft, alternatively, the samples can be analyzed, by PCR and sequencing, with the results being stored at a remote database for pattern analysis at a later date.

The samples can include particles and droplets exhaled from passengers throughout a duration of a flight. The collector can include an adaptor and a filter material operatively connected to the adaptor, buffer-ciclonic, etc . The database can include DNA and RNA sequences corresponding to all known taxa, and more specifically DNA and RNA sequences not corresponding to any of all known pathogens.

The methods and systems of the present disclosure, as described above and shown in the drawings, provide for air sample data collection system and method with superior properties. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A method (100) for collecting particulates from aircraft air comprising:
capturing (102) particulates within an aircraft cabin air with a collector for a period of time;
removing (104) the collector for testing;
conducting a test (108) on at least one particulate captured in the collector;
relaying a result (110) of the test to a central data center to store the results; **characterized by** identifying all previously known pathogens and non-described emerging microorganisms within the results (112); and
aggregating a plurality of tests from various flights around the world or a particular destination to develop a pattern of genetic sequences.

2. The method of claim 1, further comprising receiving an alarm to aggregate a particular type of result and provide a pattern to predict whether a new strain of disease is emerging.

3. The method of any preceding claim, wherein the test includes phylogenetic analysis, symptom comparison, or identification of new biological lineages.

4. The method of any preceding claim, further comprising communicating test results to corresponding health authorities.

5. The method of any preceding claim, further comprising communicating test results aggregates to corresponding health authorities.

6. The method of any preceding claim, wherein the test includes a pathogen/contaminant diagnostic device.

7. The method of any preceding claim, wherein the test includes a chemical or irritant detector.

8. A system for monitoring aircraft air comprising:
a collector for collecting particulate samples positioned within at least one of an outlet flow path or a recirculation flow path;
at least one of an outflow valve positioned in the outlet flow path downstream from the collector or a HEPA filter positioned in the recirculation flow path downstream from the collector; and **characterized by**:
a database for storing collected samples or analyzed sample materials of previously non-described emerging pathogens within the results;
wherein the database includes DNA and RNA sequences, wherein the database includes DNA and RNA sequences with previously unassigned identifiers.

9. The system of claim 8, wherein the collector includes a filter material, or a buffer-cyclonic collector.

10. The system of any of claims 8 or 9, wherein the samples include particles and droplets exhaled from passengers throughout a duration of a flight.

11. The system of any of claims 8-10, wherein the collector includes an adaptor and a filter material operatively connected to the adaptor.

## Patentansprüche

1. Verfahren (100) zum Einsammeln von Partikeln aus der Flugzeugluft, umfassend:
Auffangen (102) von Partikeln in der Luft einer Flugzeugkabine mit einem Sammler über einen bestimmten Zeitraum;
Entfernen (104) des Sammlers zum Testen;
Durchführen eines Tests (108) an mindestens einem in dem Sammler aufgefangenen Partikel;
Weiterleiten eines Ergebnisses (110) des Tests an ein zentrales Datenzentrum, um die Ergebnisse zu speichern; **gekennzeichnet durch**:
Identifizieren aller bisher bekannten Krankheitserreger und nicht beschriebenen neu auftretenden Mikroorganismen in den Ergebnissen (112); und
Zusammenfassen einer Vielzahl von Tests von verschiedenen Flügen rund um die Welt oder zu einem bestimmten Zielort, um ein Muster genetischer Sequenzen zu entwickeln.

2. Verfahren nach Anspruch 1, ferner umfassend Empfangen eines Alarms, um einen bestimmten Ergebnistyp zusammenzufassen und ein Muster bereitzustellen, mit dem sich vorhersagen lässt, ob ein neuer Krankheitsstamm auftritt.

3. Verfahren nach einem der vorhergehenden Ansprüche, wobei der Test eine phylogenetische Analyse, einen Symptomvergleich oder die Identifizierung neuer biologischer Abstammungslinien beinhaltet.

4. Verfahren nach einem der vorhergehenden Ansprüche, ferner umfassend Übermitteln der Testergebnisse an die entsprechenden Gesundheitsbehörden.

5. Verfahren nach einem der vorhergehenden Ansprüche, ferner umfassend Übermitteln der Testergebnisaggregate an die entsprechenden Gesundheitsbehörden.

6. Verfahren nach einem der vorhergehenden Ansprüche, wobei der Test eine Vorrichtung zur Diagnose von Krankheitserregern/Verunreinigungen beinhaltet.

7. Verfahren nach einem der vorhergehenden Ansprüche, wobei der Test einen Chemikalien- oder Reizstoffdetektor beinhaltet.

8. System zum Überwachen von Flugzeugluft, umfassend:
einen Sammler zum Sammeln von Partikelproben, der in mindestens einem von einem Auslassströmungsweg oder einem Rückführungsströmungsweg positioniert ist;
mindestens eines von einem Auslassventil, das in dem Auslassströmungsweg stromabwärts von dem Sammler positioniert ist, oder einem HEPA-Filter, der in dem Rückführungsströmungsweg stromabwärts von dem Sammler positioniert ist;und durch Folgendes gekennzeichnet:
eine Datenbank zum Speichern gesammelter Proben oder analysierter Probenmaterialien bisher nicht beschriebener neu auftretender Krankheitserreger in den Ergebnissen;
wobei die Datenbank DNA- und RNA-Sequenzen beinhaltet, wobei die Datenbank DNA- und RNA-Sequenzen mit bisher nicht zugewiesenen Kennungen beinhaltet.

9. System nach Anspruch 8, wobei der Sammler ein Filtermaterial oder einen Puffer-Zyklon-Sammler umfasst.

10. System nach einem der Ansprüche 8 oder 9, wobei die Partikelproben Tröpfchen und/oder Gase beinhalten, die von Passagieren während der Dauer eines Fluges ausgeatmet werden.

11. System nach einem der Ansprüche 8 bis 10, wobei der Sammler einen Adapter und ein Filmmaterial beinhaltet, das mit dem Adapter wirkverbunden ist.

## Revendications

1. Procédé (100) de collection de particules provenant de l'air d'un aéronef comprenant :
la capture (102) de particules dans l'air d'une cabine d'aéronef avec un collecteur pendant une période de temps ;
le retrait (104) du collecteur en vue d'un test ;
la réalisation d'un test (108) sur au moins une particule capturée dans le collecteur ;
la transmission d'un résultat (110) du test à un centre de données central pour stocker les résultats ; **caractérisé par** :
l'identification de tous les agents pathogènes précédemment connus et micro-organismes émergents non décrits dans les résultats (112) ; et
l'agrégation d'une pluralité de tests provenant de différents vols à travers le monde ou provenant d'une destination particulière pour développer un modèle de séquences génétiques.

2. Procédé selon la revendication 1, comprenant également la réception d'une alerte pour agréger un type particulier de résultats et la fourniture d'un modèle pour prédire si une nouvelle souche de maladie est en train d'émerger.

3. Procédé selon une quelconque revendication précédente, dans lequel le test comporte une analyse phylogénétique, une comparaison de symptômes ou l'identification de nouvelles lignées biologiques.

4. Procédé selon une quelconque revendication précédente, comprenant également la communication de résultats de test aux autorités sanitaires correspondantes.

5. Procédé selon une quelconque revendication précédente, comprenant également la communication d'agrégats de résultats de test aux autorités sanitaires correspondantes.

6. Procédé selon une quelconque revendication précédente, dans lequel le test comporte un dispositif de diagnostic d'agent pathogène/contaminant.

7. Procédé selon une quelconque revendication précédente, dans lequel le test comporte un détecteur chimique ou un détecteur d'irritants.

8. Système de surveillance de l'air d'un aéronef comprenant :
un collecteur permettant de collecter des échantillons de particules, disposé dans au moins l'un d'un trajet d'écoulement de sortie ou d'un trajet d'écoulement de recirculation ;
au moins l'un d'une vanne de sortie disposée dans le trajet d'écoulement de sortie en aval du collecteur ou d'un filtre HEPA disposé dans le trajet d'écoulement de recirculation en aval du collecteur ; et **caractérisé par** :
une base de données permettant de stocker des échantillons collectés ou des échantillons analysés d'agents pathogènes émergents non décrits précédemment dans les résultats ;
dans lequel la base de données comporte des séquences d'ADN et d'ARN, dans lequel la base de données comporte des séquences d'ADN et d'ARN avec des identifiants précédemment non attribués.

9. Système selon la revendication 8, dans lequel le collecteur comporte un matériau filtrant ou un collecteur tampon-cyclonique.

10. Système selon l'une quelconque des revendications 8 ou 9, dans lequel les échantillons comportent des particules et des gouttelettes expirées par les passagers pendant la durée d'un vol.

11. Système selon l'une quelconque des revendications 8 à 10, dans lequel le collecteur comporte un adaptateur et un matériau filtrant relié de manière fonctionnelle à l'adaptateur.
